# EUROPEAN PATENT SPECIFICATION

(11) **EP 2 479 089 B1**
(45) Date of publication and mention of the grant of the patent: **20.11.2013**
(21) Application number: 12152124.9
(22) Date of filing: 23.01.2012
(51) Int. Cl.: B62J 1/08, B62K 19/36

(54) **Bicycle with saddle for the saddle pillar**
Fahrrad mit Sattel für den Sattelständer
Bicyclette avec selle pour tige de selle

(30) Priority: 22.01.2011 NL 2006053
(43) Date of publication of application: 25.07.2012
(73) Proprietor: Gaastra, Andries, 2900 Schoten (BE)
(72) Inventor: Gaastra, Andries, 2900 Schoten (BE)
(74) Representative: Verhees, Godefridus Josephus Maria

(56) References cited:
- DE-U1- 20 305 933
- DE-U1- 20 310 592
- DE-U1-202004 012 689
- FR-A1- 2 948 625
- US-A- 4 925 203

## Description

### Field of the invention

The invention relates to a bicycle comprising a frame with a seat tube and a head tube) in which a fork is present with a front wheel in it, as well as a saddle pillar which can be moved into and out of the seat tube and a saddle attached near the top of the saddle pillar by means of a coupling member at the front of the saddle pillar, which saddle pillar is moveable between a top position, in which an upper part of the saddle pillar extends outside the seat tube, and a bottom position, and a seat stay is attached to the seat tube in which seat stay a rear wheel is present, wherein the seat tube and the saddle pillar are shaped such that the saddle in all positions between the top and bottom position is located in front of an imaginary line running through the axis of the seat tube.

### State of the art

A bicycle of this type is known from US 4925203 A. With the known bicyle the saddle is attached to the saddle pillar by means of a coupling member. The saddle is located in front of the seat tube.

The angle of inclination of the seat tube is a given that cannot be deviated from without bringing about a detrimental effect on the ergonomics of the bicycle. There is a relation between the distance from the saddle to the crankshaft and the distance from the saddle to the handlebars. This relation provides that the user has an ergonomically correct position on the bicycle and it determines the angle of inclination of the seat tube. With a conventional bicycle (having a straight seat tube and a straight saddle pillar) on which the saddle is positioned above the saddle pillar, the seat tube is present at a distance from the head tube. This distance determines the freedom of movement between the seat tube and the head tube and the larger this distance the more freedom of movement and thus the more easily a rider can mount and dismount from the bicycle.

With the known bicycle mentioned above the saddle in top position is located above the seat tube and behind the rear wheel axle. As a result, there is a great risk of the bicycle with its rider during the ride toppling over backwards over the rear axle of the rear wheel. In addition, there will be a poor distribution of weight during the ride which may induce the front wheel of a bicycle whose front wheel is driven by an electromotor to slip.

### Summary of the invention

It is an object of the invention to provide a bicycle of the type defined in the opening paragraph, which is safer in use than the known bicycle. For this purpose the bicycle according to the invention is characterised in that the angle of inclination of the seat tube is such that the saddle in all positions of the saddle pillar between the top and bottom position remains before the axle of the rear wheel. This eliminates the hazard of toppling over backwards. Thus the bicycle according to the invention is safer than the known bicycle without this being at the cost of the ideal seating position. In addition, the distribution of weight between front and rear axle is improved, which is especially beneficial to electrically driven bicycles having the electromotor on the front axle.

By shifting the seat tube backwards relative to the position on a conventional bicycle and while having frame dimensions that remain the same, more room is created for a rider to mount and dismount. Since the saddle is positioned before the saddle pillar in lieu of above it, the distance between the saddle and the handlebars has not changed, so that there is still the same relation between the distance from the saddle to the crankshaft and the distance from the saddle to the handlebars. Ergo, the bicycle according to the invention is more comfortable than a conventional bicycle, again without this being at the cost of the ideal seating position.

The seat tube and the saddle pillar preferably have a straight or substantially straight shape.

From DE 202004012689 U a bicycle is known having a saddle pillar moveable between a top position and a bottom position. In this known bicycle the saddle pillar extends completely inside the seat tube, even in top position. The present invention, however relates to a bicycle in which an upper part of the saddle pillar extends outside the seat tube in the top position.

The safest position of the saddle for a user is the position in which the user, once seated on the saddle, can simultaneously touch the ground with both feet. Further, the optimized position of the saddle is the position in which the distances from the saddle to the crankshaft and to the handlebars are such that an optimum ergonomic position on the bicycle can be adopted. If one wishes to achieve this optimization for people 150cm tall and over, the bottom position of the saddle is to be sufficiently low to accommodate a person 150cm in length on the saddle with the feet touching the ground. This determines the maximum length of the seat tube and thus also the distance between the bottom and top position of the saddle. The latter in its turn determines the maximum length of the people for whom the bicycle has optimum use.

An embodiment of the bicycle according to the invention is **characterised in** that in the front of the seat tube from the top down there is provided a slot through which in the bottom position of the saddle pillar the coupling member projects and the saddle is located in front of the seat tube. As a result, a longer seat tube can be used than if the saddle would be located on top of the saddle pillar. The advantage of this is that the distance between the top and bottom position of the saddle is larger and the bicycle according to the invention is of optimum use for more people.

A further embodiment of the bicycle according to the invention is **characterised in that** the frame of the bicycle further comprises a top tube which is located between the seat tube and the head tube or between the seat tube and the front part of the down tube, and in that the top tube has a further slot which extends from the end attached to the seat tube to distal from this end. A top tube of this type is often applied in conventional bicycles to enhance the rigidity of the frame. This top tube is preferably attached to the seat tube near the top of the seat tube. On a bicycle comprising such a top tube, this tube would be an obstruction when the saddle is moved to the bottom position. Therefore, in this embodiment this top tube also has a slot through which the coupling member can project in the bottom position of the saddle.

### Brief description of the drawings

The invention will be described below in more detail based on examples of embodiment of the bicycle according to the invention represented in the drawing figures, in which:
Fig. 1 shows a side elevation of a first embodiment of the bicycle according to the invention;
Fig. 2 shows the bicycle shown in Fig. 1 with the saddle and handlebars in three different positions;
Fig. 3 shows a front elevation of a detail of the top part of the seat tube with the saddle of the bicycle shown in Fig. 1;
Fig. 4 shows a second embodiment of the bicycle according to the invention provided with a top tube;
Fig. 5 shows a detail of the top part of the seat tube with the saddle in the position shown in Fig. 4; and
Fig. 6 shows the top part of the seat tube with the saddle in the bottom position of the saddle.

### Detailed description of the drawings

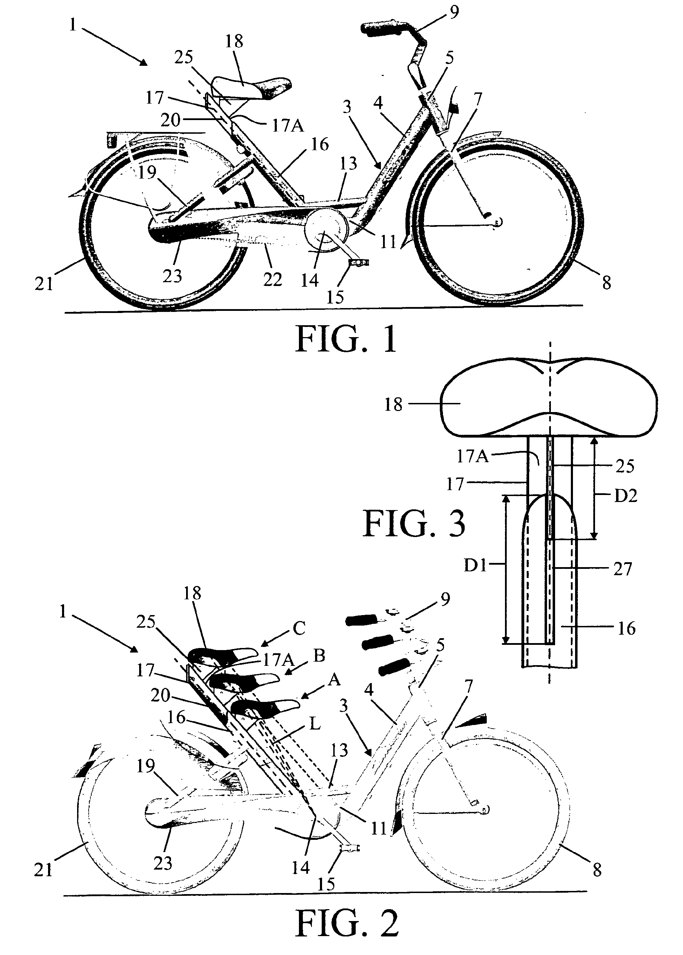

Fig. 1 shows a side elevation of an embodiment of the bicycle according to the invention. The bicycle 1 comprises a frame 3 with a down tube 4. To the front part of the down tube is attached a head tube 5 in which a fork 7 with a front wheel 8 in it, and handlebars 9 can be pivoted. To the rear part of the down tube 4 is attached a crankshaft bracket 11 as well as a cross tube 13. The crankshaft bracket accommodates a crankshaft 14 with pedals 15 bearing mounted in it. To this crankshaft bracket and cross tube is attached a straight seat tube 16 in which a straight saddle pillar 17 with a saddle 18 attached to it can be moved. The seat tube and saddle pillar may be arranged slightly oval shaped or rectangular to prevent the saddle pillar from turning around its longitudinal axis relative to the seat tube. A seat stay 19 is attached to the seat tube 16 in which seat stay a rear wheel 21 is present. Sprockets with a chain 22 passing over them are present on the hub of the rear wheel and on the crankshaft. This chain is guarded by a chain guard 23.

The saddle pillar 17 can be shifted between a top position and a bottom position. Fig. 2 shows the bicycle 1 with the saddle 18 and handlebars 9 in three different positions. In addition to the bottom position A also in two intermediate positions B and C. A coupling member 25 is attached to the saddle pillar near the top of the front 17A of the saddle pillar 17 directed to the head tube. The coupling member is formed by a plate extending in the direction of movement. In the bottom position of the seat tube the coupling member projects from a slot 27 provided in the seat tube 16 (see Fig. 3). This slot extends from the top of the seat tube downwards over a distance D1 which is at least equal to the distance D2 along the saddle pillar 17 over which the coupling member 25 is attached to the saddle pillar.

The saddle 18 is mounted on top of the coupling member 25 and is positioned in the direction of movement at a slight distance from the saddle pillar 17 (see Fig. 2). As a result, the seat tube 16 can be moved further backwards. The position of the seat tube 16 and the saddle pillar 17 is indicated by means of a dotted line if the saddle 18 were mounted on top of the saddle pillar 17. In the bottom position of the saddle pillar the saddle 18 is thus present in front of the seat tube 16. In consequence, a longer seat tube can be used than if the saddle were present on top of the saddle pillar. The advantage of this is that the distance between the top and bottom position of the saddle is larger and the bicycle has optimum use for more people. Since the saddle in all positions between the top and bottom position is located in front of an imaginary line 20 through the axis of the seat tube, the angle of the connecting line L between the saddle and the crankshaft 14 changes when the saddle is adjusted for height. This creates a variable seating angle, so that persons between 150 and 195 cm in height can adopt an ergonomic seating postion (correct distance between saddle and handlebars) and only a single frame size is needed, whereas for conventional bicycles five different frame sizes would be needed for this. As a result, the user always adopts a comfortable and ergonomically upright seating position during a ride.

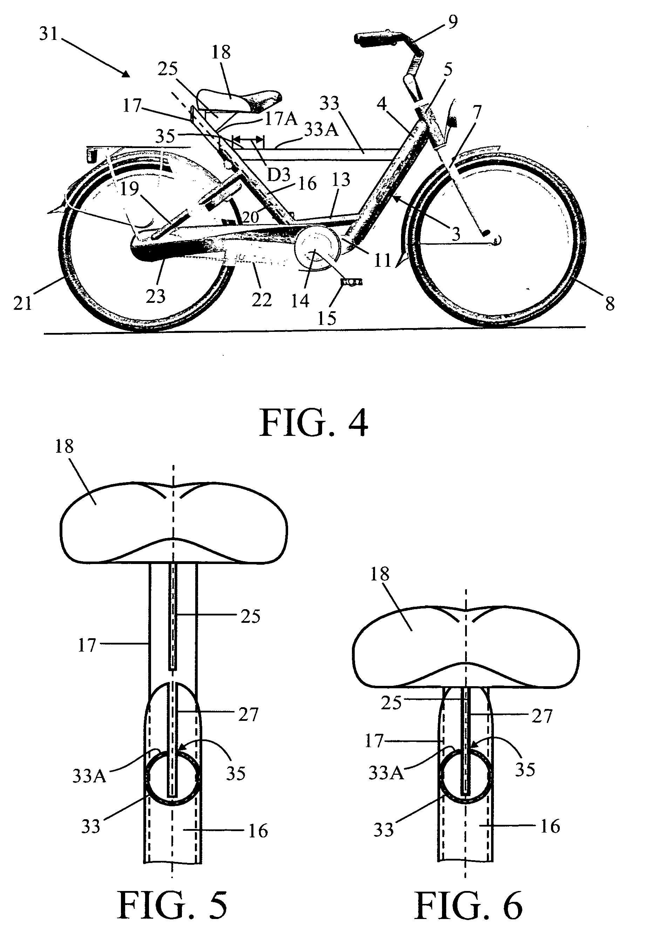

Fig. 4 shows a second embodiment of the bicycle according to the invention. All parts that are similar to those of the first embodiment are indicated by similar reference numerals. In this bicycle 31 the frame 3 comprises a top tube 33 which extends between the seat tube 16 and the head tube 5. A further slot 35 is provided in the upper side 33A of this top tube. This further slot extends over a distance D3 from the end of the top tube attached to the seat tube to accommodate the coupling member 25 when the saddle 18 is in its bottom position.

Fig. 5 shows a front elevation and for illustrative purposes a detail of the upper part of the seat tube 16 with the saddle 18 in the position shown in Fig. 4. This detail with the saddle in bottom position is furthermore shown in Fig. 6 for illustrative purposes.

Albeit the invention has been described in the foregoing based on the drawing, it should be observed that the invention is not by any manner or means restricted to the embodiment shown in the drawing. The invention also extends to all embodiments deviating from the embodiment shown in the drawing within the scope defined by the claims.

## Claims

1. A bicycle (1; 31) comprising a frame (3) with a seat tube (16) and a head tube (5) in which a fork (7) is present with a front wheel (8) in it, as well as a saddle pillar (17) which can be moved into and out of the seat tube and a saddle (18) attached near the top of the saddle pillar by means of a coupling member (25) at the front of the saddle pillar, which saddle pillar is moveable between a top positionin which an upper part of the saddle pillar extends outside the seat tube, and a bottom position (A), and a seat stay (19) is attached to the seat tube in which seat stay a rear wheel (21) is present, wherein the seat tube (16) and the saddle pillar (17) are shaped such that the saddle (18) in all positions between the top and bottom position is located in front of an imaginary line (20) running through the axis of the seat tube, **characterised in that** the angle of inclination of the seat tube is such that the saddle (18) in all positions of the saddle pillar (17) between the top and bottom position remains before the axle of the rear wheel (21).

2. A bicycle (1; 31) as claimed in claim 1, **characterised in that** the seat tube (16) and the saddle pillar (17) have a straight or substantially straight shape.

3. A bicycle (1; 31) as claimed in claim 1 or 2, **characterised in that** in the front of the seat tube (16) from the top down there is provided a slot (27) through which in the bottom position of the saddle pillar (17) the coupling member (25) projects and the saddle (18) is located in front of the seat tube.

4. A bicycle (31) as claimed in claim 3, **characterised in that** the frame (3) of the bicycle further comprises a top tube (33) which is located between the seat tube (16) and the head tube (5) or between the seat tube and the front part of the down tube (4), and **in that** the top tube has a further slot (35) which extends from the end attached to the seat tube to distal from this end.

## Patentansprüche

1. Fahrrad (1; 31), welches einen Rahmen (3) mit einem Sattelrohr (16) und einem Steuerrohr (5) umfasst, in dem sich eine Gabel (7) mit einem darin vorhandenen Vorderrad (8) befindet, und das ferner eine in dem Sattelrohr auf und ab verschiebbare Sattelstütze (17) sowie einen über ein Verbindungsteil (25) an der Vorderseite (17A) und nahe dem oberen Ende der Sattelstütze befestigten Sattel (18) umfasst, wobei die Sattelstütze zwischen einer oberen Stellung und einer unteren Stellung (A) verschiebbar ist, sowie ferner eine mit dem Sattelrohr verbundene Hinterradgabel (19), in der sich ein Hinterrad (21) befindet, wobei das Sattelrohr (16) und die Sattelstütze (17) so geformt sind, dass sich der Sattel (18) in allen Stellungen zwischen der oberen und der unteren Stellung vor einer gedachten Linie (20) befindet, die durch die Mittellinie des Sattelrohrs verläuft, **dadurch gekennzeichnet, dass** der Sattel durch den gewählten Neigungswinkel des Sattelrohrs in allen Positionen der Sattelstütze (17) zwischen der oberen und der unteren Stellung vor der Achse des Hinterrades (21) bleibt.

2. Fahrrad (1; 31) nach Anspruch 1, **dadurch gekennzeichnet, dass** das Sattelrohr (16) und die Sattelstütze (17) eine gerade oder nahezu gerade Form besitzen.

3. Fahrrad (1; 31) nach einem der Ansprüche 1 oder 2, **dadurch gekennzeichnet, dass** an der Vorderseite des Sattelrohrs (16), von dem oberen Ende ausgehend, ein Schlitz (27) vorhanden ist, wobei das Verbindungsteil (25), wenn sich die Sattelstütze (17) in der unteren Position befindet, in dem Schlitz steckt und der Sattel (18) vor dem Sattelrohr angeordnet ist.

4. Fahrrad (1; 31) nach Anspruch 3, **dadurch gekennzeichnet, dass** der Rahmen (3) des Fahrrads ferner ein Verbindungsrohr (33) umfasst, das zwischen dem Sattelrohr (16) und dem Steuerrohr (5) oder zwischen dem Sattelrohr und dem vorderen Teil des Unterrohrs (4) verläuft, und dass in dem Verbindungsrohr ein weiterer Schlitz (35) vorhanden ist, der dort beginnt, wo das Verbindungsrohr an dem Sattelrohr befestigt ist und der bis zu einem gewissen Abstand von dem Sattelrohr reicht.

## Revendications

1. Cycle (1; 31) comprenant un cadre (3) ayant un tube de selle (16) et un tube de direction (5) dans lequel se trouve une fourche (7) munie d'une roue avant (8), ainsi qu'une tige de selle (17) pouvant coulisser dans le et hors du tube de selle et une selle (18) fixée à proximité de l'extrémité supérieure de la tige de selle sur le devant (17A) de celle-ci au moyen d'une pièce de raccordement (25), laquelle tige de selle peut coulisser entre une position supérieure et une position inférieure (A), et une fourche arrière (19) reliée au tube de selle et munie d'une roue arrière (21), où le tube de selle (16) et la tige de selle (17) ont une forme telle que la selle (18) se trouve, dans toutes les positions situées entre la position supérieure et la position inférieure, devant une ligne imaginaire (20) le long de la ligne médiane du tube de selle, **caractérisé en ce que** l'angle d'inclinaison du tube de selle est tel que la selle (18) reste devant l'axe de la roue arrière (21) dans toutes les positions de la tige de selle (17) allant de la position supérieure à la position inférieure.

2. Cycle (1; 31) selon la revendication 1, **caractérisé en ce que** le tube de selle (16) et la tige de selle (17) ont une forme rectiligne ou pratiquement rectiligne.

3. Cycle (1; 31) selon la revendication 1 ou 2, **caractérisé en ce qu'**une fente (27) se trouve dans le tube de selle (16) depuis l'extrémité supérieure du tube de selle et sur le devant de celui-ci, où, dans la position inférieure de la tige de selle (17), la pièce de raccordement (25) passe à travers la fente et la selle (18) se trouve devant le tube de selle.

4. Cycle (31) selon la revendication 3, **caractérisé en ce que** le cadre (3) du cycle comprend de plus un tube de jonction (33) s'étendant entre le tube de selle (16) et le tube de direction (5) ou entre le tube de selle et la partie du tube de cadre (4) se trouvant en avant, et **en ce que** dans le tube de jonction se trouve une autre fente (35) s'étendant depuis l'extrémité fixée au tube de selle jusqu'à une certaine distance de cette extrémité.
